# EUROPÄISCHE PATENTANMELDUNG

(11) **EP 4 553 771 A1**
(43) Veröffentlichungstag der Anmeldung: **14.05.2025**
(21) Anmeldenummer: 24208597.5
(22) Anmeldetag: 24.10.2024
(51) Int. Cl.: G06T 7/73

(54) **KAMERABASIERTES SYSTEM UND VERFAHREN ZUM BESTIMMEN UND VERIFIZIEREN DER POSITION EINES ANHÄNGERS**

(30) Priorität: 10.11.2023 DE 102023131359
(71) Anmelder: MEKRA Lang GmbH & Co. KG, 91465 Ergersheim (DE)
(72) Erfinder: Bauer, Christian, 91468 Gutenstetten (DE); Fauth, Kai, 97276 Margetshöchheim (DE); Kersten, Christian, 90766 Fürth (DE); Köhler, André, 90469 Nürnberg (DE); Richter, Thomas, 90542 Eckental (DE); Schade, Anne, 97076 Würzburg (DE)
(74) Vertreter: Alpspitz IP

(57) **Zusammenfassung**

Ein kamerabasiertes System eines Fahrzeugs mit einer Zugeinheit (4) und einem sich nach hinten erstreckenden schwenkbaren Anhänger (5), enthaltend mindestens eine an der Zugeinheit (4) vorgesehenen Bildaufnahmevorrichtung (2) mit einem Bildsensor zum Aufnehmen von zeitlich aufeinander folgenden Kamerabildern (6) von dem Anhänger (5); mindestens einer Anzeigevorrichtung(1) zur Anzeige eines von der mindestens einen Bildaufnahmevorrichtung (2) aufgenommenen Kamerabilds (6); und mindestens eine Verarbeitungsvorrichtung (3), die konfiguriert ist zur Durchführung eines Verfahrens zum Verifizieren einer von einem externen Verfahren erhaltenen Information über ein Anhängerende, und zum Bestimmen und Verifizieren eines Anhängerendes

## Beschreibung

Die Erfindung betrifft ein kamerabasiertes System (Sichtsystem bzw. Spiegelersatzsystem) und ein Verfahren zum Bestimmen und Verifizieren der Position eines Endes eines sich von einem Fahrzeug nach hinten erstreckenden, schwenkbaren Anhängers, insbesondere geeignet für ein Nutzfahrzeug mit Auflieger, Trailer, Anhänger oder einem anderen zur Fahrerkabine bzw. der Zugmaschine schwenkbaren, sich nach hinten erstreckenden Abschnitt.

Der Fahrer eines Fahrzeugs, das eine Zugmaschine bzw. Zugeinheit mit einem sich nach hinten erstreckenden, schwenkbaren Anhänger aufweist, beobachtet üblicherweise den rückwärtigen Verkehr mit Hilfe eines an der Zugeinheit seitlich angebrachten Seitenspiegels. Diese Seitenspiegel werden im zunehmenden Maße durch Kamerasysteme, wie Kameramonitorsystem bzw. Spiegelersatzsysteme ersetzt oder wenigstens ergänzt, die seitlich oder am hinteren Teil des Fahrzeugs verbaut sind. Dabei werden herkömmliche Spiegelsysteme ersetzt oder ergänzt, die für ein Kraftfahrzeug vorgeschrieben sind, wie beispielsweise Außenspiegel (Hauptspiegel), Innenspiegel an PKWs oder Weitwinkelspiegel und Frontspiegel an Nutzfahrzeugen.

Bei den oben genannten Systemen wird beispielsweise dem Fahrer des Fahrzeugs das entsprechende Sichtfeld, das herkömmlicherweise durch einen Spiegel einsehbar gemacht wird, mitunter dauerhaft und in Echtzeit auf einem Monitor oder einer anderen Wiedergabeeinheit beispielsweise im Innenraum des Fahrzeugs angezeigt, so dass der Fahrer des Fahrzeugs jederzeit Einsicht in das entsprechende Sichtfeld nehmen kann, obwohl er weder direkte Sicht in das entsprechende Sichtfeld hat noch ein Spiegel vorgesehen ist.

Ein Anhänger im Sinne der vorliegenden Lehre umfasst Anhänger, die mittels Anhängerkupplung an ein Fahrzeug (Zugmaschine bzw. Zugeinheit) gekoppelt werden, beispielsweise Auflieger (sogenannte Trailer), die auf den hinteren, abgesenkten Bereich einer Zugmaschine aufgelegt und damit schwenkbar, um zumindest eine vertikale Achse, verbunden werden. Alternativ können solche Anhänger auch an Pkws angebrachte Anhänger sein, wobei in diesem Fall der Pkw der Zugmaschine entspricht. In allgemeinen Worten ist ein Anhänger ein sich nach hinten erstreckender Abschnitt, der sich rückwärtig zur Fahrerkabine eines Fahrzeugs befindet und ein seitlich relativ zur Fahrerkabine beweglicher (ausschwenkbarer) Fahrzeugteil ist, der bei einer Kurvenfahrt relativ zur Fahrerkabine um eine vertikale Achse schwenkt. Auch Knicklenker oder Gliederzüge sind Anhänger im Sinne der Erfindung.

Bei Verwendung eines oben genannten Spiegelersatzsystems wird jedoch bei einer Kurvenfahrt eines Fahrzeugs mit Zugeinheit und Anhänger der rückwärtige Verkehr im Bild eines Spiegelersatzsystems für z.B. die Sichtfeldklasse II nach ECE R46 mit zunehmendem Knickwinkel zwischen Zugeinheit und Anhänger zunehmend verdeckt. Ferner geht das hintere Teil des Anhängers in der Nähe der Hinterachse verloren, wodurch das Ende des Anhängers aus einem dem Fahrer angezeigten Monitorbild verschwinden kann.

Um dieses Problem zu lösen, gibt es bereits Verfahren zum Verfolgen des Anhängerendes und zum Verschieben des auf einem Monitor angezeigten Bildausschnittes derart, dass die Anhängerendkante mittig im Monitorbild angezeigt wird, soweit dies möglich ist. Gemäß der EP 16 198 485 erfolgt diese Nachverfolgung der Anhängerendkante aktuell beispielsweise mittels Radsensoren, die insbesondere Information über eine Drehbewegung der Räder erfassen. Diese Information wird von einer Steuereinheit ausgewertet, um basierend auf der erfassten Information über die Drehbewegung der Räder den Heckbereich des sich nach hinten erstreckenden Abschnitts zu bestimmen und geeignet nachzuführen. Da diese Sensoren jedoch erst ab einer gewissen Geschwindigkeit zuverlässige Signale liefern können, beispielsweise ab ca. 2 km/h, kann diese Nachverfolgung der Anhängerendkante nur bei Vorwärtsfahrt mit höheren Geschwindigkeiten eingesetzt werden. Für Rangiervorgänge in Rückwärtsfahrt und bei kleinen Geschwindigkeiten können diese Sensoren nicht verwendet werden, um eine Anhängerendkante hinreichend genau für eine Nachverfolgung der Anhängerendkante in einem Monitorbild zu detektieren. Ferner weisen bekannte Verfahren zum Nachverfolgen einer Anhängerendes Ungenauigkeiten auf, die möglicherweise korrigiert werden müssen.

Eine erste Aufgabe der Erfindung ist es, ein Verfahren zum Nachverfolgen eines Anhängerendes zu verifizieren, also beispielsweise eine Plausibilitätsprüfung durchzuführen, ob ein für die Nachverfolgung ermitteltes bzw. bestimmtes Anhängerende akzeptabel ist.

Eine zweite Aufgabe der Erfindung ist es, obiges Problem zu lösen und auch für Rangiervorgänge in Rückwärtsfahrt und bei kleinen Geschwindigkeiten in Vorwärts- und Rückwärtsfahrt die Position des Anhängerendes hinreichend genau für eine Nachverfolgung in einem Monitorbild zu detektieren, unabhängig von Anhängertyp und von Information, die beispielsweise von verbauten Sensoren erfasst wird.

Obige Aufgaben werden durch die Verfahren mit den Merkmalen der Ansprüche 1 und 8 sowie durch die Systeme mit den Merkmalen der Ansprüche 5 und 14 gelöst. Vorteilhafte Weiterentwicklungen der Erfindung sind in den Unteransprüchen angegeben.

Das erfindungsgemäße Verfahren zum Verifizieren eines Verfahrens zum Nachverfolgen eines Anhängerendes empfängt Information über die Position eines Anhängerendes eines sich von einer Zugeinheit eines Fahrzeugs nach hinten erstreckenden schwenkbaren Anhängers von einem Verfahren zum Nachverfolgen eines Anhängerendes, das verifiziert werden soll. Das erfindungsgemäße Verfahren erfasst ein Kamerabild von einem seitlichen Bereich des Anhängers durch einen Bildsensor einer von mindestens einer an dem Fahrzeug, vorzugsweise an der Zugeinheit angebrachten Bildaufnahmevorrichtung, und in dem erfassten Kamerabild werden sogenannte Featurepunkte basierend auf einem oder mehreren Bildparametern bestimmt, wobei ein Featurepunkt mindestens einem Pixel oder Pixelcluster in dem Kamerabild entspricht. Ein Pixel in dem Kamerabild kann dabei als Featurepunkt bestimmt werden, wenn sich beispielsweise ein Wert eines Bildparameters dieses Pixels von einem Wert eines entsprechenden Bildparameters von einem oder von mehreren benachbarten Pixeln um ein festgelegtes Ausmaß unterscheidet.

Beispielsweise können auch mehrere benachbarte Pixel, die ein Pixelcluster bildet mit einem angrenzenden bzw. benachbarten Pixelcluster hinsichtlich mindestens eines Bildparameters verglichen werden, um einen Featurepunkt zu bestimmen. Die Pixel bzw. Pixelcluster müssen auch nicht direkt nebeneinander liegen, eine räumliche Nähe zueinander kann dabei ausreichend sein.

Featurepunkte können beispielsweise basierend auf einem oder mehreren Bildparametern, mindestens einer Berechnungsgröße von einer oder mehreren Bildparametern und/oder derer Gradienten bestimmt werden, wobei ein Featurepunkt mindestens einem Pixel in dem Kamerabild entspricht. Ein Pixel in dem Kamerabild kann dabei als Featurepunkt bestimmt werden, wenn sich beispielsweise ein Wert eines Bildparameters dieses Pixels von einem Wert eines entsprechenden Bildparameters von einem oder von mehreren benachbarten Pixeln um ein festgelegtes Ausmaß unterscheidet.

Beispielsweise können auch mehrere benachbarte Pixel, die ein Pixelcluster bilden, mit einem angrenzenden bzw. benachbarten Pixelcluster hinsichtlich mindestens eines Bildparameters verglichen werden, um einen Featurepunkt zu bestimmen. Die Pixel bzw. Pixelcluster müssen auch nicht direkt nebeneinander liegen, eine räumliche Nähe zueinander kann dabei ausreichend sein.

Das erfindungsgemäße Verfahren erzeugt dann ein Blockraster auf mindestens einem Teil des erfassten Kamerabilds, wobei das Blockraster eine Mehrzahl von durch Spalten und Zeilen definierte Zellen aufweist. Durch das Erzeugen des Blockraster auf dem Kamerabild, das die bestimmten Featurepunkte aufweist, wird eine Verteilung der Mehrzahl der Featurepunkte über die Mehrzahl von Zellen des Blockrasters definiert.

Das erfindungsgemäße Verfahren vergleicht dann das so erzeugte Blockraster mit der Verteilung der Featurepunkte mit Verteilungen von Featurepunkten einer Mehrzahl von entsprechenden gespeicherten Blockrastern, wobei die gespeicherten Blockraster jeweils unterschiedliche Verteilungen von Featurepunkten in Verbindung mit einem tatsächlichen Anhängerende definieren. Basierend auf einer Korrelation zwischen der Verteilung der Featurepunkte in dem erzeugten Blockraster und den Verteilungen der Featurepunkte in den gespeicherten Blockrastern wird dann eines der gespeicherten Blockraster mit der Information über das tatsächliche Anhängerende ausgewählt und verwendet, um die empfangene Information über das Anhängerende zu verifizieren.

Gemäß einer vorteilhaften Ausgestaltung des erfindungsgemäßen Verfahrens werden die Featurepunkte in dem erzeugten Blockraster gewichtet. Eine derartige Gewichtung kann beispielsweise auf einem Kontrastunterschied zwischen Pixeln bzw. Pixelclustern und benachbarten bzw. in räumlicher Nähe liegenden Pixeln bzw. Pixelclustern basieren. Einer oder mehrere bekannte Bildparameter können als Grundlage für das Gewichten dienen.

Gemäß einer weiteren vorteilhaften Ausgestaltung des erfindungsgemäßen Verfahrens kann basierend auf der obigen Verifikation die empfangene Information über das Anhängerende korrigiert werden, beispielsweise wenn eine Abweichung einen vorbestimmten Schwellenwert überschreitet.

Gemäß einer weiteren vorteilhaften Ausgestaltung des erfindungsgemäßen Verfahrens können die Verteilungen der Featurepunkte und die entsprechenden Anhängerenden in den gespeicherten Blockrastern vorab gespeichert werden oder in Echtzeit in fest definierten oder dynamisch einstellbaren zeitlichen Abständen erzeugt und gespeichert werden, beispielsweise bei einer Vorwärtsfahrt.

Gemäß einer weiteren vorteilhaften Ausgestaltung des erfindungsgemäßen Verfahrens kann die unterschiedliche Verteilung der Featurepunkte in den gespeicherten Blockrastern von dem Knickwinkel oder einer relativen Positionsbeziehung zwischen Anhänger und Zugeinheit abhängen, der bzw. die in Verbindung mit dem Blockraster gespeichert wird und Bestandteil des Blockrasters ist. Ein solcher Knickwinkel bzw. eine solche relative Positionsbeziehung kann unabhängig von erfassten Kamerabildern bestimmt werden, z.B. mittels eines am Fahrzeug angebrachten Knickwinkelsensors, oder er kann durch die Daten von einem Lenkwinkelsensor abgeschätzt werden. Der entsprechende Knickwinkel kann zusammen mit einem Blockraster gespeichert werden.

Gemäß einer weiteren vorteilhaften Ausgestaltung des Verfahrens ist der Bildparameter beispielsweise mindestens einer von einem Helligkeitswert, Farbwert, Grauton oder Gradienten dieser Werte, wobei vor einer Bestimmung der Featurepunkte in einem Kamerabild dieses Kamerabild unbearbeitet bleibt oder geeignet bearbeitet wird, um beispielsweise eine Kontrastunterschied, Helligkeitsunterschied, etc. noch deutlicher sichtbar zu machen. Andere hier nicht explizit aufgeführten Bildparameter sind ebenfalls denkbar.

Gemäß einer weiteren vorteilhaften Ausgestaltung des erfindungsgemäßen Verfahrens kann das zu verifizierende Verfahren zum Nachverfolgen eines Anhängerendes ein radarbasiertes Verfahren, ein Ultraschallverfahren, ein Lidar-basiertes Verfahren, ein CAN-basiertes Verfahren und/oder ein optisches Verfahren sein.

Das erfindungsgemäße Verfahren zum Bestimmen eines Anhängerendes eines sich von einer Zugeinheit eines Fahrzeugs nach hinten erstreckenden schwenkbaren Anhängers erfasst ein Kamerabild des Anhängers und bestimmt eine Mehrzahl von Featurepunkten in dem Kamerabild basierend auf mindestens einem Bildparameter, wobei ein Featurepunkt mindestens einem Pixel in dem Kamerabild entspricht. Das erfindungsgemäße Verfahren erzeugt weiter ein Blockraster auf mindestens einem Teil des erfassten Kamerabilds, ähnlich wie in dem oben beschriebenen erfindungsgemäßen Verifizierungsverfahren, wobei das Blockraster eine Mehrzahl von Zellen definiert, und bestimmt eine Verteilung der Mehrzahl der Featurepunkte über die Mehrzahl von Zellen des Blockrasters. Durch Vergleichen der Verteilung der Featurepunkte in dem erzeugten Blockraster mit Verteilungen von Featurepunkten einer Mehrzahl von entsprechenden gespeicherten Blockrastern, wobei die gespeicherten Blockraster jeweils unterschiedliche Verteilungen von Featurepunkten in Verbindung mit tatsächlichen Anhängerenden definieren, kann ein Blockraster aus den gespeicherten Blockrastern ausgewählt werden, das am besten mit dem erzeugten Blockraster korreliert. Die Information über das Anhängerende, die in Verbindung mit bzw. zugehörig zu dem ausgewählten Blockraster gespeichert ist, wird erfindungsgemäß als das Anhängerende bestimmt.

Gemäß einer weiteren vorteilhaften Ausgestaltung des erfindungsgemäßen Verfahrens kann die Verteilung der Featurepunkte und das entsprechende Anhängerende in einem Blockraster vorab gespeichert sein, oder in Echtzeit zu fest definierten oder dynamisch einstellbaren zeitlichen Abständen erzeugt und gespeichert werden. Beispielsweise kann dies während einer Vorwärtsfahr passieren. Die gespeicherten Blockraster können dann bei einer nachfolgend langsamen Rückwärtsfahrt verwendet werden, um das Anhängerende zu bestimmen.

Gemäß einer weiteren vorteilhaften Ausgestaltung des erfindungsgemäßen Verfahrens hängen die unterschiedlichen Verteilungen der Featurepunkte mit dem entsprechenden Anhängerende in den gespeicherten Blockrastern von dem Knickwinkel zwischen Anhänger und Zugeinheit ab bzw. der relativen Positionsbeziehung zwischen Anhänger und Zugeinheit. Die Information über den Knickwinkel und/oder relative Positionsbeziehung kann beispielsweise in Verbindung mit jedem Blockraster abgespeichert werden. Dadurch kann beispielsweise bei Kenntnis des aktuellen Knickwinkels, der durch am Fahrzeug verbaute Sensoren erfasst wird, direkt das gespeicherte Blockraster für diesen Knickwinkel gefunden und das in dem gespeichert Blockraster definierte Anhängerende als die Position des Anhängerendes bestimmt werden.

Gemäß einer weiteren vorteilhaften Ausgestaltung des erfindungsgemäßen Verfahrens kann das Bestimmen des Anhängerendes für zeitlich nachfolgende Kamerabilder angewendet werden und so eine Nachverfolgung des Anhängerendes derart realisiert werden, dass einem Fahrer bei Kurvenfahrt die Position des Anhängerendes an einer Vorzugsposition in dem Monitorbild angezeigt wird, beispielsweise mittig in dem Monitorbild oder plus minus 10% bis 25% von der Mitte nach links oder rechts verschoben.

Gemäß einer weiteren vorteilhaften Ausgestaltung des erfindungsgemäßen Verfahrens kann das auf diese Weise bestimmte Anhängerende durch das oben genannte Verifizierungsverfahren überprüft werden.

Die erfindungsgemäßen Systeme zum Verifizieren und Bestimmen eines Anhängerendes sind kamerabasiertes Systeme für ein Fahrzeug mit einer Zugeinheit und einem sich nach hinten erstreckenden schwenkbaren Anhänger, die mindestens eine Bildaufnahmevorrichtung mit einem Bildsensor zum Aufnehmen von zeitlich aufeinander folgenden Kamerabildern des Anhängers aufweisen, und mindestens eine Verarbeitungsvorrichtung, die konfiguriert ist zur Durchführung der oben beschriebenen erfindungsgemäßen Verfahrens zum Verifizieren und Bestimmen eines Anhängerendes.

Optional weist das erfindungsgemäße System eine Anzeigevorrichtung auf der die Position des Anhängerendes auf einem Monitorbild angezeigt wird.

Gemäß einer vorteilhaften Ausgestaltung der erfindungsgemäßen kamerabasiertes Systeme sind diese UN ECE R46 zugelassenes Spiegelersatzsystem, vorzugsweise für Nutzfahrzeuge.

### Aspekte der Erfindung

1. Verfahren zum Verifizieren eines Verfahrens zum Nachverfolgen eines Anhängerendes, mit den Schritten:
   Empfangen von mindestens einer Information über die Position eines Anhängerendes (12) eines sich von einer Zugeinheit (4) eines Fahrzeugs nach hinten erstreckenden schwenkbaren Anhängers (5) von dem Verfahren zum Nachverfolgen eines Anhängerendes;
   Erfassen eines Kamerabilds (6) von mindestens einem seitlichen Bereich des Anhängers durch einen Bildsensor mindestens einer Bildaufnahmevorrichtung (2);
   Bestimmen einer Mehrzahl von Featurepunkten (8) in dem Kamerabild (6) basierend auf mindestens einem Bildparameter, wobei ein Featurepunkt (8) mindestens einem Pixel in dem Kamerabild (6) entspricht;
   Erzeugen eines Blockrasters (10) auf mindestens einem Teil des erfassten Kamerabilds (6), wobei das Blockraster (10) eine Mehrzahl von Zellen (11) definiert, und Bestimmen einer Verteilung der Mehrzahl der Featurepunkte (8) über die Mehrzahl von Zellen (11) des Blockrasters (10) als Bestandteil des erzeugten Blockrasters (10);
   Vergleichen der Verteilung der Featurepunkte (8) in dem erzeugten Blockraster (10) mit Verteilungen von Featurepunkten einer Mehrzahl von entsprechenden gespeicherten Blockrastern, wobei die gespeicherten Blockraster jeweils unterschiedliche Verteilungen von Featurepunkten in Verbindung mit einem tatsächlichen Anhängerende definieren;
   Auswählen von einem der gespeicherten Blockraster basierend auf einer Korrelation zwischen der Verteilung der Featurepunkte (8) in dem erzeugten Blockraster (10) und den Verteilungen der Featurepunkte in den gespeicherten Blockrastern;
   Verifizieren der empfangenen Information über die Position des Anhängerendes (12) durch Vergleichen der durch das ausgewählte Blockraster definierten tatsächlichen Position des Anhängerendes mit der empfangenen Information über die Position des Anhängerende (12).
2. Verfahren nach Aspekt 1, ferner mit einem Korrigieren der empfangenen Information über die Position des Anhängerendes (12) basierend auf der Verifizierung.
3. Verfahren nach Aspekt 1 oder 2, bei dem die Verteilungen der Featurepunkte und die entsprechenden Anhängerenden in den gespeicherten Blockrastern vorab gespeichert sind oder in Echtzeit in fest definierten oder dynamisch einstellbaren zeitlichen Abständen erzeugt und gespeichert werden.
4. Verfahren nach einem der vorangegangenen Aspekte, bei dem die Verteilung der Featurepunkte in einem der gespeicherten Blockraster von der Verteilung der Featurepunkte in einem anderen der gespeicherten Blockraster gemäß der relativen Positionsbeziehung zwischen Anhänger (4) und Zugeinheit (5) abweicht.
5. Verfahren nach einem der vorangegangenen Aspekte, bei dem der mindestens eine Bildparameter mindestens einer ist von einem Helligkeitswert, Farbwert, Grauton, Kontrastwert und/oder einer Berechnungsgröße aus einem dieser Werte und/oder deren Gradienten eines Pixels und/oder Pixelclusters in einem Kamerabild (6).
6. Verfahren nach einem der vorangegangenen Aspekte, bei dem das Verfahren zum Nachverfolgen einer Position eines Anhängerendes ein radarbasiertes Verfahren, ein Ultraschallverfahren, ein Lidar-basiertes Verfahren, ein CAN-basiertes Verfahren und/oder ein optisches Verfahren ist.
7. Verfahren nach einem der vorhergehenden Aspekte, bei dem ein Featurepunkt (8) einem Pixel oder einem Cluster von wenigen unmittelbar aneinander angrenzenden oder in räumlicher Nähe liegenden Pixeln entspricht.
8. Verfahren nach einem der vorangegangenen Aspekte, bei dem die in den gespeicherten Blockrastern definierten jeweiligen tatsächlichen Anhängerenden von einem anderen Verfahren stammen.
9. Verfahren nach einem der vorangegangenen Aspekte, mit
   Nachführen der Position des Anhängerendes derart, dass das Anhängerende an einer Vorzugsposition in einem Monitorbild mindestens einer Anzeigevorrichtung (1) eines kamerabasierten Systems erscheint.
10. Kamerabasiertes System eines Fahrzeugs mit einer Zugeinheit (4) und einem sich nach hinten erstreckenden schwenkbaren Anhänger (5), enthaltend:
   mindestens eine an der Zugeinheit (4) vorgesehenen Bildaufnahmevorrichtung (2) mit mindestens einem Bildsensor zum Aufnehmen von zeitlich aufeinander folgenden Kamerabildern (6) von dem Anhänger (5); und
   mindestens eine Verarbeitungsvorrichtung (3), die konfiguriert ist zur Durchführung des Verfahrens gemäß einem der Aspekte 1 bis 9.
11. Kamerabasiertes System nach Aspekt 10, ferner mit
   mindestens einer Anzeigevorrichtung (1) zur Anzeige eines von der mindestens einen Bildaufnahmevorrichtung (2) aufgenommenen Kamerabilds (6) und zum Nachführen der Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild der Anzeigevorrichtung (1) erscheint.
12. Kamerabasiertes System nach Aspekt 10 oder 11, das gemäß UN ECE R46 zugelassen ist.
13. Verfahren zum Bestimmen eines Anhängerendes eines sich von einer Zugeinheit (4) eines Fahrzeugs nach hinten erstreckenden schwenkbaren Anhängers (5) mit den Schritten:
   Erfassen eines Kamerabilds (6) des Anhängers (5) durch einen Bildsensor mindestens einer Bildaufnahmevorrichtung (2);
   Bestimmen einer Mehrzahl von Featurepunkten (8) in dem Kamerabild (6) basierend auf mindestens einem Bildparameter, wobei ein Featurepunkt (8) mindestens einem Pixel in dem Kamerabild (6) entspricht;
   Erzeugen eines Blockrasters (10) auf mindestens einem Teil des erfassten Kamerabild (6), wobei das Blockraster (10) eine Mehrzahl von Zellen (11) definiert, und Bestimmen einer Verteilung der Mehrzahl der Featurepunkte (8) über die Mehrzahl von Zellen (11) des Blockrasters (10) als Bestandteil des erzeugten Blockrasters (10);
   Vergleichen der Verteilung der Featurepunkte (8) in dem erzeugten Blockraster (10) mit Verteilungen von Featurepunkten einer Mehrzahl von entsprechenden gespeicherten Blockrastern, wobei die gespeicherten Blockraster jeweils unterschiedliche Verteilungen von Featurepunkten in Verbindung mit tatsächlichen Positionen der Anhängerenden definieren;
   Auswählen von einem der gespeicherten Blockraster basierend auf einer Korrelation zwischen den Featurepunkten (8) in dem erzeugten Blockraster (10) und den Featurepunkten in den gespeicherten Blockrastern;
   Bestimmen der in dem ausgewählten Blockraster definierten Position des Anhängerendes als das Ende des Anhängers (5).
14. Verfahren nach Aspekt 13, bei dem die Verteilungen der Featurepunkte und die entsprechenden Anhängerenden in den gespeicherten Blockrastern vorab gespeichert oder in Echtzeit in fest definierten oder dynamische einstellbaren zeitlichen Abständen erzeugt und gespeichert werden.
15. Verfahren nach Aspekt 13 oder 14, bei dem der mindestens eine Bildparameter mindestens einer ist von einem Helligkeitswert, Farbwert, Grauton, Kontrastwert und/oder einer Berechnungsgröße aus einem der Werte und/oder deren Gradienten eines Pixels und/oder Pixelclusters in einem Kamerabild (6).
16. Verfahren nach einem der Aspekte 13 bis 15, bei dem das bestimmte Anhängerende durch das Verfahren gemäß einem der Ansprüche 1 bis 9 verifiziert wird.
17. Verfahren nach einem der Aspekte 13 bis 16, bei dem die in den gespeicherten Blockrastern jeweils definierten tatsächlichen Positionen der Anhängerenden von einem anderen Verfahren stammen.
18. Verfahren nach einem der Aspekte 13 bis 17, ferner mit Nachführen der Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild einer Anzeigevorrichtung (1) eines kamerabasierten Systems erscheint.
19. Kamerabasiertes System eines Fahrzeugs mit einer Zugeinheit (4) und einem sich nach hinten erstreckenden schwenkbaren Anhänger (5), enthaltend:
   mindestens eine an der Zugeinheit (4) vorgesehenen Bildaufnahmevorrichtung (2) mit einem Bildsensor zum Aufnehmen von zeitlich aufeinander folgenden Kamerabildern (6) des Anhängers (5); und
   mindestens eine Verarbeitungsvorrichtung (3), die konfiguriert ist zur Durchführung des Verfahrens gemäß einem der Aspekte 13 bis 18.
20. Kamerabasiertes System, ferner mit
   mindestens einer Anzeigevorrichtung (1) zur Anzeige eines von der mindestens einen Bildaufnahmevorrichtung (2) aufgenommenen Kamerabilds (6) und zum Nachführen der Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild der Anzeigevorrichtung (1) erscheint.
21. Kamerabasiertes System nach Aspekt 19 oder 20, das gemäß UN ECE R46 zugelassen ist.

### Kurze Beschreibung der Figuren

Nachfolgend wird die Erfindung rein beispielhaft unter Bezugnahme auf die beigefügten Figuren beschrieben, wobei gleiche Bezugszeichen gleiche oder ähnliche Komponenten kennzeichnen. Es zeigen:
- Figur 1: eine schematische Darstellung eines kamerabasierten Systems gemäß einem bevorzugten Ausführungsbeispiel der vorliegenden Erfindung;
- Figur 2: eine Draufsicht auf ein Fahrzeug, das das in Figur 1 gezeigte kamerabasierte System verwendet;
- Figur 3: ein von dem Kamerasystem gemäß Figur 1 aufgenommenen Kamerabilds;
- Figur 4: das Kamerabild gemäß Figur 3 zur Verdeutlichung der Bestimmung von Featurepunkten;
- Figur 5: das Kamerabild gemäß Figur 4 mit einem Blockraster gemäß dem bevorzugten Ausführungsbeispiel der Erfindung;
- Figur 6: eine Zelle des Blockrasters von Figur 3 mit Featurepunkten gemäß dem bevorzugten Ausführungsbeispiel der Erfindung; und
- Figur 7: ein auf einem Monitor als Monitorbild angezeigtes Kamerabild gemäß Figur 3 mit nachgeführtem Ende des Anhängers.

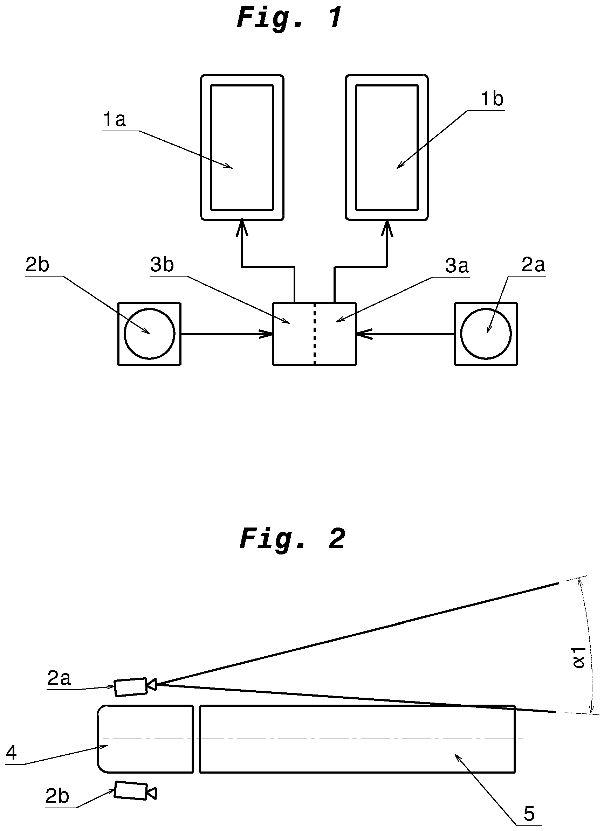

Figur 1 zeigt ein kamerabasiertes System gemäß einer bevorzugten Ausführungsform der Erfindung mit Anzeigevorrichtungen 1a, 1b, Bildaufnahmevorrichtungen 2a, 2b und Verarbeitungsvorrichtungen 3a, 3b.

Die Bildaufnahmevorrichtungen 2a, 2b sind vorzugsweise auf gegenüberliegenden Seites eines Fahrzeugs angeordnet, und über die Verarbeitungsvorrichtungen 3a, 3b jeweils mit den Anzeigevorrichtungen 1a, 1b verbunden. Die Bildaufnahmevorrichtungen 2a, 2b sind auf der gegenüberliegenden Seite des Fahrzeugs angeordnet, wie beispielsweise in Figur 2 gezeigt. Die Verarbeitungsvorrichtungen 3a, 3b weisen gemäß der bevorzugten Ausführungsform beispielsweise eine nicht näher gezeigte Knickwinkelbestimmungsvorrichtung und eine Bilddatenbearbeitungsvorrichtung auf und sind insbesondere in der Lage das später beschrieben erfindungsgemäße Verfahren zum Bestimmen der Position eines Anhängerendes durchzuführen, das Anhängerende auf den Anzeigevorrichtungen 1a, 1b nachzuführen und zu korrigieren.

Der Einfachheit halber werden im Folgenden nur die Anzeigevorrichtung 1a, die Bildaufnahmevorrichtungen 2a sowie die Verarbeitungsvorrichtung 3a beschrieben. Die Ausführungen gelten jedoch analog für die Anzeigevorrichtung 1b, die Bildaufnahmevorrichtungen 2b sowie die Verarbeitungsvorrichtung 3b auf der gegenüberliegenden Seite des Fahrzeugs. Ferner kann gemäß der bevorzugten Ausführungsform nur eine Verarbeitungsvorrichtung vorgesehen werden, die die Funktion der Verarbeitungsvorrichtungen 3a und 3b übernimmt.

Wie in Figur 2 gezeigt, weist das Fahrzeug beispielsweise ein Zugfahrzeug 4 und einen schwenkbar daran angebrachten Anhänger 5 auf. Die Bildaufnahmevorrichtung 2a deckt mit ihrem Aufnahmebereich beispielsweise einen Sichtbereich bzw. ein Sichtfeld ab, der/das gemäß ECE-R46 einem "Hauptspiegel (groß) Gruppe II" entspricht. Andere geeignete definierte Sichtfelder können entsprechend nationalen Regelungen von der Bildaufnahmevorrichtung 2a abgedeckt werden.

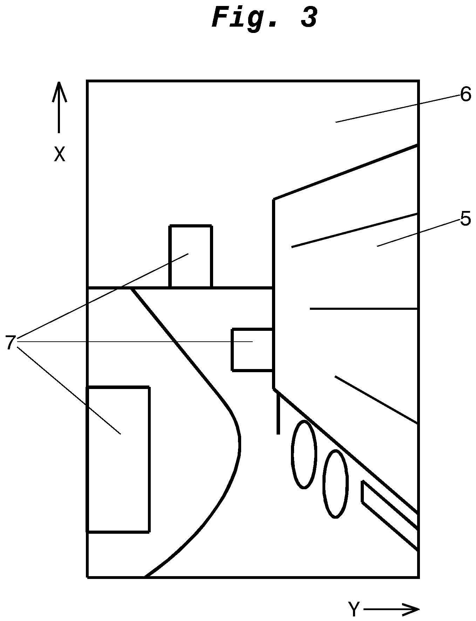

Figur 2 zeigt das Fahrzeug in geradeaus Fahrt ohne einem Knickwinkel zwischen dem Zugfahrzeug 4 und dem Anhänger 5. Bei einer Kurvenfahrt bildet sich ein Knickwinkel zwischen dem Zugfahrzeug 4 und dem Anhänger 5 und ein hinteres Ende des Anhängers 5 verschiebt sich mit zunehmenden Knickwinkel in das Sichtfeld der Bildaufnahmevorrichtung 2a. Figur 3 zeigt ein von der Bildaufnahmevorrichtung 2a aufgenommenes Kamerabild 6, bei dem das Ende des Anhängers 5 mit zunehmendem Knickwinkel den rückwärtigen Verkehr verdeckt. Die Bildaufnahmevorrichtung 2a ist in der Lage eine Reihe von zeitlich nachfolgenden Bildern aufzunehmen.

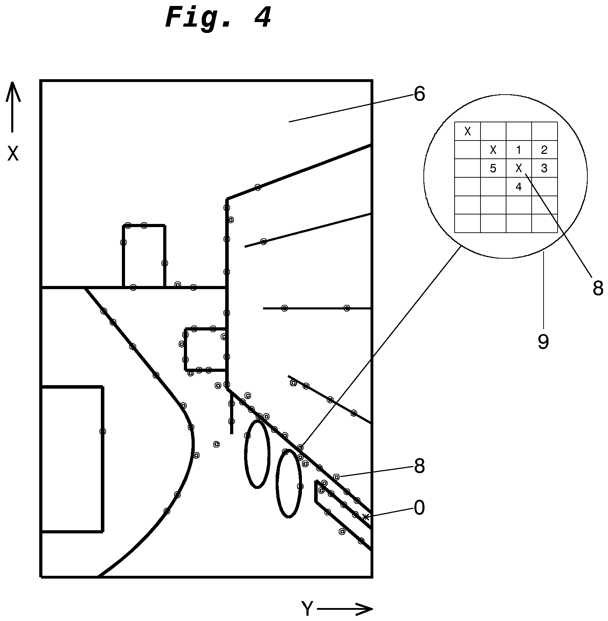

Figur 3 zeigt ein von dem kamerabasiertes System von Figur 1 aufgenommenes Kamerabild 6 als ein auf einem Monitor dargestelltes Monitorbild des Anhängers 5 und eines rückwärtigen Verkehrs 7. Figur 4 dient zur Veranschaulichung der Bestimmung von Featurepunkten (8) in diesem Kamerabild 6.

Gemäß einer bevorzugten Ausführungsform des erfindungsgemäßen Verfahrens zum Verifizieren des Anhängerendes bzw. der Anhängerendkante in dem Kamerabild 6 werden in dem zweidimensionalen Kamerabild 6 mit den Koordinatenachsen x und y eine Mehrzahl von Featurepunkten 8 bestimmt, wie in Figur 4 gezeigt. Die Featurepunkte 8 entsprechen jeweils einem einzelnen Pixel oder mehrere Pixel einem Pixelcluster. Figur 4 verdeutlicht in der vergrößerten Darstellung eines Teilausschnitts des Kamerabilds 6 ein Pixelfeld 9. Gemäß der bevorzugten Ausführungsform wird beispielsweise ein Pixel, das die Nachbarpixel 1 bis 5 aufweist, als Featurepunkt bestimmt, wenn ein vorbestimmter Kontrastunterschied mindestens zu einem Teil der Nachbarpixel vorliegt. Andere Bildparameter zur Bestimmung, ob ein Pixel ein Featurepunkt ist, oder nicht, können alternativ oder kumulativ verwendet werden.

Gemäß der bevorzugten Ausführungsform des erfindungsgemäßen Verfahrens können die in Figur 4 bestimmten Featurepunkte 8 gewichtet werden, um einen Kontrastunterschied zwischen benachbarten oder in räumlicher Nähe liegenden Pixeln zu betonen bzw. besser zu ermitteln. Ein Gewichtungsparameter kann zum Beispiel die Geschwindigkeit sein, mit der sich Featurepunkte relativ zur Zugmaschine, d.h. in ihrer Position auf dem Bildsensor verändern: keine oder nur kleine Veränderungen können höher gewichtet werden, da bei ihnen anzunehmen ist, dass es sich um mit dem Fahrzeug mitbewegte und damit z.B. auf dem Anhänger befindliche Punkte handelt. Für die weitere Verarbeitung in dem erfindungsgemäßen Verfahren werden dann beispielsweise nur noch Featurepunkte mit oder aber einer bestimmten Gewichtung verwendet, so dass nicht alle Featurepunkte verwendet werden müssen, wodurch Rechenkapazität eingespart werden kann.

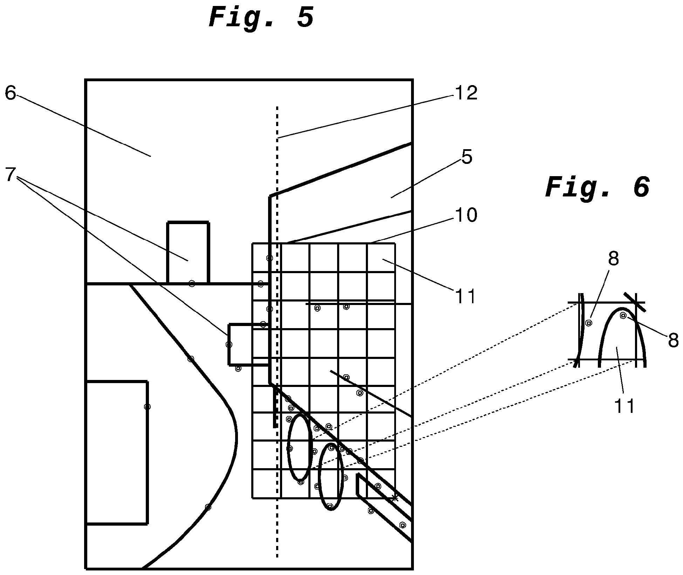

Gemäß der bevorzugten Ausführungsform des erfindungsgemäßen Verfahrens wird ein Blockraster 10 auf zumindest einem Teil des Kamerabilds 6 erzeugt, wie in Figur 5 gezeigt. Das erste Blockraster 10 kann beispielsweise unter Verwendung eines in Figur 4 gezeigten Startpunkts 0 erzeugt werden. Das Blockraster 10 hat eine Mehrzahl von Spalten und Zeilen, die eine Mehrzahl von Zellen 11 definieren. Bei dem Blockraster 10 in Figur 5 ist die Anzahl der Spalten ungleich der Anzahl der Zeilen. Grundsätzlich könnte auch eine Rastereinteilung mit anderen als rechteckigen Zellen verwendet werden. Figur 5 zeigt auch ein durch eine senkrechte Linie 12 angegebenes zu verifizierendes Anhängerende, das beispielsweise von einem externen Verfahren zum Bestimmen eines Anhängerendes erhalten wird.

Gemäß der bevorzugten Ausführungsform des erfindungsgemäßen Verfahrens wird eine Verteilung der Mehrzahl von Featurepunkten 8, die in obiger Weise bestimmt werden, über der Mehrzahl von Zellen 11 bestimmt. Die in Figur 6 gezeigte Zelle 11 weist beispielsweise zwei Featurepunkte 8 auf. Die so bestimmte Verteilung der Featurepunkte über die Zellen des erzeugten Blockrasters 10 wird dann mit Verteilungen von Featurepunkten einer Mehrzahl von entsprechenden gespeicherten Blockrastern (nicht gezeigt) verglichen. Die gespeicherten Blockraster definieren jeweils unterschiedliche Verteilungen der Featurepunkte in Verbindung mit einer Position des tatsächlichen Anhängerendes und einem Knickwinkel. Gemäß der bevorzugten Ausführungsform des erfindungsgemäßen Verfahrens wird basierend auf dem Knickwinkel und einer Korrelation der Verteilung der Featurepunkte in dem erzeugten Blockraster und in den gespeicherten Blockrastern ein entsprechendes gespeichertes Blockraster ausgewählt, in dem das tatsächliche Anhängerende definiert ist. Durch einen Vergleich dieses tatsächlichen Anhängerendes mit dem (eingegebenen) zuvor bestimmten Anhängerende kann dieses verifiziert und gegebenenfalls verworfen oder korrigiert werden.

Gemäß der bevorzugten Ausführungsform des erfindungsgemäßen Verfahrens kann die Verteilung der Featurepunkte und die entsprechenden (tatsächlichen) Anhängerenden in den gespeicherten Blockraster vorab gespeichert sein oder in Echtzeit bei Durchführung des Verfahrens in fest definierten oder dynamisch zeitlichen Abständen erzeugt und gespeichert werden.

Durch das Verwenden von gespeicherten Blockrastern, in denen neben der Verteilung der Featurepunkte über die Zellen auch Information über das Anhängerende gespeichert ist, kann darüber hinaus gemäß einer bevorzugten Ausführungsform des erfindungsgemäßen Verfahrens zum Bestimmen der Position des Anhängerendes auch ohne das Vorliegen eines zu verifizierenden Anhängerendes das Anhängerende in obiger Weise mittels Vergleich eines erzeugten Blockrasters mit den gespeicherten Blockrastern ermittelt und zur mittigen Nachführung in einem Kamerabild verwendet werden, wie oben beschrieben.

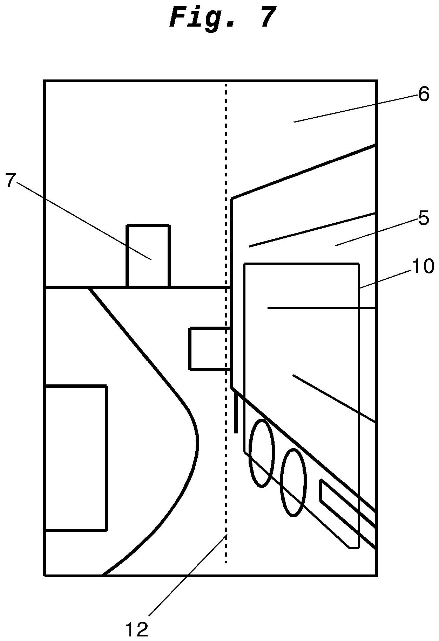

Figur 7 zeigt eine nachgeführte Position des Anhängerendes in einem Kamerabilder 6 an einer Vorzugsposition in einem angezeigten Monitorbild. Die Vorzugsposition ist dabei beispielsweise mittig in dem Monitorbild oder um beispielsweise 0% bis 25% links oder rechts von der Mitte verschoben. Die Vorzugsposition kann beispielsweise auch 0% bis 25% vom linken oder rechten Rand des Monitorbildes versetzt sein.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 0: Startpunkt
- 1a, 1b: Anzeigevorrichtung
- 2a, 2b: Bildaufnahmevorrichtung
- 3a, 3b: Verarbeitungsvorrichtung
- 4: Zugfahrzeug bzw. Zugeinheit
- 5: Anhänger
- 6: Kamerabild
- 7: rückwärtiger Verkehr
- 8: Featurepunkt
- 9: Pixelfeld
- 10: Blockraster
- 11: Zelle
- 12: Linie, die das zu verifizierende Anhängerende angibt

## Patentansprüche

1. Verfahren zum Verifizieren eines Verfahrens zum Nachverfolgen eines Anhängerendes, mit den Schritten:
Empfangen von mindestens einer Information über die Position eines Anhängerendes (12) eines sich von einer Zugeinheit (4) eines Fahrzeugs nach hinten erstreckenden schwenkbaren Anhängers (5) von dem Verfahren zum Nachverfolgen eines Anhängerendes;
Erfassen eines Kamerabilds (6) von mindestens einem seitlichen Bereich des Anhängers durch einen Bildsensor mindestens einer Bildaufnahmevorrichtung (2);
Bestimmen einer Mehrzahl von Featurepunkten (8) in dem Kamerabild (6) basierend auf mindestens einem Bildparameter, wobei ein Featurepunkt (8) mindestens einem Pixel in dem Kamerabild (6) entspricht;
Erzeugen eines Blockrasters (10) auf mindestens einem Teil des erfassten Kamerabilds (6), wobei das Blockraster (10) eine Mehrzahl von Zellen (11) definiert, und Bestimmen einer Verteilung der Mehrzahl der Featurepunkte (8) über die Mehrzahl von Zellen (11) des Blockrasters (10) als Bestandteil des erzeugten Blockrasters (10);
Vergleichen der Verteilung der Featurepunkte (8) in dem erzeugten Blockraster (10) mit Verteilungen von Featurepunkten einer Mehrzahl von entsprechenden gespeicherten Blockrastern, wobei die gespeicherten Blockraster jeweils unterschiedliche Verteilungen von Featurepunkten in Verbindung mit einem tatsächlichen Anhängerende definieren;
Auswählen von einem der gespeicherten Blockraster basierend auf einer Korrelation zwischen der Verteilung der Featurepunkte (8) in dem erzeugten Blockraster (10) und den Verteilungen der Featurepunkte in den gespeicherten Blockrastern;
Verifizieren der empfangenen Information über die Position des Anhängerendes (12) durch Vergleichen der durch das ausgewählte Blockraster definierten tatsächlichen Position des Anhängerendes mit der empfangenen Information über die Position des Anhängerende (12).

2. Verfahren nach Anspruch 1, ferner mit einem Korrigieren der empfangenen Information über die Position des Anhängerendes (12) basierend auf der Verifizierung.

3. Verfahren nach Anspruch 1 oder 2, bei dem die Verteilungen der Featurepunkte und die entsprechenden Anhängerenden in den gespeicherten Blockrastern vorab gespeichert sind oder in Echtzeit in fest definierten oder dynamisch einstellbaren zeitlichen Abständen erzeugt und gespeichert werden.

4. Verfahren nach einem der vorangegangenen Ansprüche, bei dem die Verteilung der Featurepunkte in einem der gespeicherten Blockraster von der Verteilung der Featurepunkte in einem anderen der gespeicherten Blockraster gemäß der relativen Positionsbeziehung zwischen Anhänger (4) und Zugeinheit (5) abweicht, und/oder
nach einem der vorangegangenen Ansprüche, bei dem der mindestens eine Bildparameter mindestens einer ist von einem Helligkeitswert, Farbwert, Grauton, Kontrastwert und/oder einer Berechnungsgröße aus einem dieser Werte und/oder deren Gradienten eines Pixels und/oder Pixelclusters in einem Kamerabild (6), und/oder
nach einem der vorangegangenen Ansprüche, bei dem das Verfahren zum Nachverfolgen einer Position eines Anhängerendes ein radarbasiertes Verfahren, ein Ultraschallverfahren, ein Lidar-basiertes Verfahren, ein CAN-basiertes Verfahren und/oder ein optisches Verfahren ist, und/oder nach einem der vorhergehenden Ansprüche, bei dem ein Featurepunkt (8) einem Pixel oder einem Cluster von wenigen unmittelbar aneinander angrenzenden oder in räumlicher Nähe liegenden Pixeln entspricht, und/oder
nach einem der vorangegangenen Ansprüche, bei dem die in den gespeicherten Blockrastern definierten jeweiligen tatsächlichen Anhängerenden von einem anderen Verfahren stammen, und/oder
nach einem der vorangegangenen Ansprüche, mit
Nachführen der Position des Anhängerendes derart, dass das Anhängerende an einer Vorzugsposition in einem Monitorbild mindestens einer Anzeigevorrichtung (1) eines kamerabasierten Systems erscheint.

5. Kamerabasiertes System eines Fahrzeugs mit einer Zugeinheit (4) und einem sich nach hinten erstreckenden schwenkbaren Anhänger (5), enthaltend:
mindestens eine an der Zugeinheit (4) vorgesehenen Bildaufnahmevorrichtung (2) mit mindestens einem Bildsensor zum Aufnehmen von zeitlich aufeinander folgenden Kamerabildern (6) von dem Anhänger (5); und
mindestens eine Verarbeitungsvorrichtung (3), die konfiguriert ist zur Durchführung des Verfahrens gemäß einem der Ansprüche 1 bis 4.

6. Kamerabasiertes System nach Anspruch 5, ferner mit
mindestens einer Anzeigevorrichtung (1) zur Anzeige eines von der mindestens einen Bildaufnahmevorrichtung (2) aufgenommenen Kamerabilds (6) und zum Nachführen der Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild der Anzeigevorrichtung (1) erscheint.

7. Kamerabasiertes System nach Anspruch 5 oder 6, das gemäß UN ECE R46 zugelassen ist.

8. Verfahren zum Bestimmen eines Anhängerendes eines sich von einer Zugeinheit (4) eines Fahrzeugs nach hinten erstreckenden schwenkbaren Anhängers (5) mit den Schritten:
Erfassen eines Kamerabilds (6) des Anhängers (5) durch einen Bildsensor mindestens einer Bildaufnahmevorrichtung (2);
Bestimmen einer Mehrzahl von Featurepunkten (8) in dem Kamerabild (6) basierend auf mindestens einem Bildparameter, wobei ein Featurepunkt (8) mindestens einem Pixel in dem Kamerabild (6) entspricht;
Erzeugen eines Blockrasters (10) auf mindestens einem Teil des erfassten Kamerabild (6), wobei das Blockraster (10) eine Mehrzahl von Zellen (11) definiert, und Bestimmen einer Verteilung der Mehrzahl der Featurepunkte (8) über die Mehrzahl von Zellen (11) des Blockrasters (10) als Bestandteil des erzeugten Blockrasters (10);
Vergleichen der Verteilung der Featurepunkte (8) in dem erzeugten Blockraster (10) mit Verteilungen von Featurepunkten einer Mehrzahl von entsprechenden gespeicherten Blockrastern, wobei die gespeicherten Blockraster jeweils unterschiedliche Verteilungen von Featurepunkten in Verbindung mit tatsächlichen Positionen der Anhängerenden definieren;
Auswählen von einem der gespeicherten Blockraster basierend auf einer Korrelation zwischen den Featurepunkten (8) in dem erzeugten Blockraster (10) und den Featurepunkten in den gespeicherten Blockrastern;
Bestimmen der in dem ausgewählten Blockraster definierten Position des Anhängerendes als das Ende des Anhängers (5).

9. Verfahren nach Anspruch 8 bei dem die Verteilungen der Featurepunkte und die entsprechenden Anhängerenden in den gespeicherten Blockrastern vorab gespeichert oder in Echtzeit in fest definierten oder dynamische einstellbaren zeitlichen Abständen erzeugt und gespeichert werden.

10. Verfahren nach Anspruch 8 oder 9, bei dem der mindestens eine Bildparameter mindestens einer ist von einem Helligkeitswert, Farbwert, Grauton, Kontrastwert und/oder einer Berechnungsgröße aus einem der Werte und/oder deren Gradienten eines Pixels und/oder Pixelclusters in einem Kamerabild (6).

11. Verfahren nach einem der Ansprüche 8 bis 10, bei dem das bestimmte Anhängerende durch das Verfahren gemäß einem der Ansprüche 1 bis 4 verifiziert wird.

12. Verfahren nach einem der Ansprüche 8 bis 11, bei dem die in den gespeicherten Blockrastern jeweils definierten tatsächlichen Positionen der Anhängerenden von einem anderen Verfahren stammen.

13. Verfahren nach einem der Ansprüche 8 bis 12, ferner mit Nachführen der Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild einer Anzeigevorrichtung (1) eines kamerabasierten Systems erscheint.

14. Kamerabasiertes System eines Fahrzeugs mit einer Zugeinheit (4) und einem sich nach hinten erstreckenden schwenkbaren Anhänger (5), enthaltend:
mindestens eine an der Zugeinheit (4) vorgesehenen Bildaufnahmevorrichtung (2) mit einem Bildsensor zum Aufnehmen von zeitlich aufeinander folgenden Kamerabildern (6) des Anhängers (5); und
mindestens eine Verarbeitungsvorrichtung (3), die konfiguriert ist zur Durchführung des Verfahrens gemäß einem der Ansprüche 8 bis 13, wobei das System vorzugsweise gemäß UN ECE R46 zugelassen ist.

15. Kamerabasiertes System, ferner mit
mindestens einer Anzeigevorrichtung (1) zur Anzeige eines von der mindestens einen Bildaufnahmevorrichtung (2) aufgenommenen Kamerabilds (6) und zum Nachführen der Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild der Anzeigevorrichtung (1) erscheint, wobei das System vorzugsweise gemäß UN ECE R46 zugelassen ist.
